Europäisches Patentamt

European Patent Office

Office européen des brevets

(11) Publication number: **0 577 120 A1**

## EUROPEAN PATENT APPLICATION

(21) Application number: **93110505.0**

(22) Date of filing: **01.07.93**

(51) Int. Cl.5: **A61G 7/015**, F16C 11/00, F16C 11/04

(30) Priority: **03.07.92 IT MI921626**

(43) Date of publication of application:
**05.01.94 Bulletin 94/01**

(84) Designated Contracting States:
**AT BE CH DE ES FR GB LI NL**

(71) Applicant: **Gangemi, Maria**
**Via Messina 6**
**I-96015 Francofonte (Siracusa)(IT)**

(72) Inventor: **Di Blasi, Rosario**
**Via Messina 6**
**I-96015 Francofonte (Siracusa)(IT)**

(74) Representative: **Gervasi, Gemma et al**
**NOTARBARTOLO & GERVASI Srl**
**Viale Bianca Maria 33**
**I-20122 Milan (IT)**

(54) Hinge, in particular for hospital beds, having a virtual rotation axis.

(57) A hinge, in particular for beds having folding or inclinable parts, connecting two elements (9) (10) constituting the support surface of the mattress, characterized in that its rotation axis is virtual and lies outside the overall dimensions of said hinge. The hinge comprises two identical devices which in their turn comprise a first articulated quadrilateral having sides (1)(3) (5) (7), and a second articulated quadrilateral having sides (2) (4) (6) (8). Sides (5) and (7) of the first articulated quadrilateral are the extentions of sides (8) and (6) respectively of the second articulated quadrilateral; all of the four sides (5, 6, 7, 8) rotate about the same articulation (h).

Fig. 3

EP 0 577 120 A1

FIELD OF INVENTION

The object of this invention is a new hinge having a virtual rotation axis, i.e. an axis lying outside the overall dimensions of such hinge. The latter may be used effectively in beds in which a part at least of the resting surface is inclinable, such as, in particular, hospital beds or folding beds.

PRIOR ART

In beds in which a part at least of the resting surface is inclinable, such as in particular hospital beds, the rotation movement of the part that corresponds to the patient's shoulders takes place usually about a hinge whose rotation axis lies within the overall dimensions of the hinge. This kind of hinge has a drawback in that, in correspondence to same, the mattress deforms and is subject to strains which severely affect the duration and which limit the inclination angle of the inclinable part.

SUMMARY OF THE INVENTION

In the light of the above observations, the need has been felt of finding a hinge having a virtual rotation axis lying outside its overall size, i.e. above the mattress support surface.

The hinge object of this invention comprises at least two identical devices, constituted each by two articulated quadrilaterals, in which two sides of the first quadrilateral are the extension of two sides of the second quadrilateral: these four sides rotate about the same articulation.

By suitably dimensioning the hinge, it can be adapted to any application; in particular it may be advantageously used for the construction of hospital beds or any kind of folding bed.

The movement of the inclinable part with respect to the fixed part of the bed can be effected by hand or by means of an actuator (e.g. an oleodynamic, pneumatic, electric one) which allows the inclination and translation of the inclinable part.

LIST OF ATTACHED DRAWINGS AND TABLES

Fig. 1 is the trigonometric diagram of the hinge with a rotation virtual axis object of this invention.

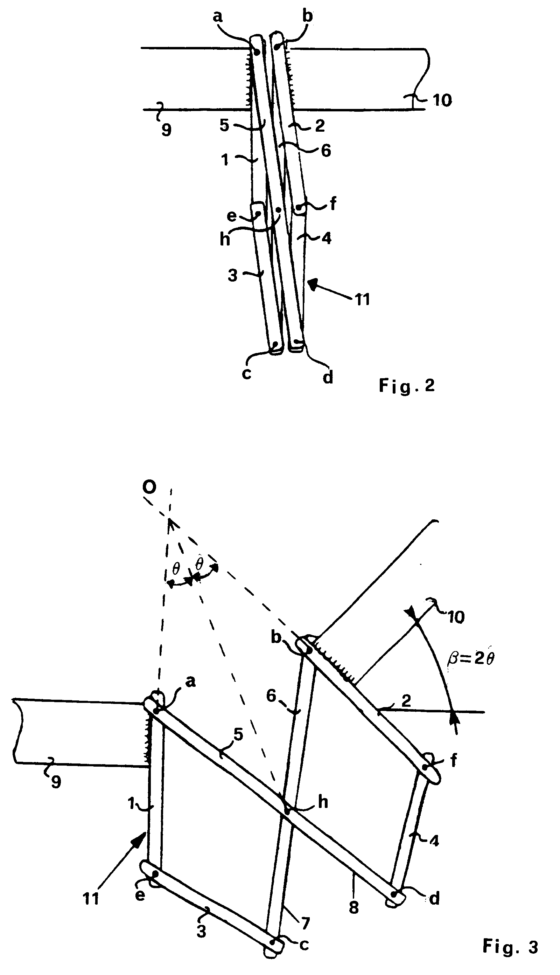

Fig. 2 shows a device which, preferably coupled with at least another identical device, constitutes the hinge object of this invention: in this case, the reclinable part is horizontally placed.

Fig. 3 shows the device of fig. 2: in this case, the reclinable part is inclined of the angle $\beta$ with respect to the part that has remained in horizontal position.

In Table I, elaborated for a given hinge (individuated by the s/i ratio) are given the position of the rotation virtual axis (individuated by the adimensional parameter (k)), and the inclination of the reclinable part ($\beta$ angle), in function of the $2\alpha$ opening angle of said hinge.

In Table II, elaborated for a set of hinges (individuated each by the s/i ratio), the range of the rotation virtual axis (individuated by the minimum and maximum values of the adimensional parameter (k)) and the inclination maximum angle of the reclinable part (($\beta$max) angle) have been tabulated for each hinge.

DETAILED DESCRIPTION OF THE INVENTION

The hinge object of this invention comprises basically at least two identical devices placed on the longitudinal edges of the bed.

In the following disclosure, we shall refer, for exposition convenience, to one device only of those which constitute the hinge object of this invention. Each device comprises a first articulated quadrilateral constituted by sides (1) (3) (5) (7) and a second articulated quadrilateral constituted by sides (2) (4) (6) (8), in which sides (5) and (7) of the first articulated quadrilateral are the extention of sides (8) and (6) of the second articulated quadrilateral respectively; sides (5) (6) (7) (8) are hinged in articulation (h). The fixed part of the bed (9) is integral with side (1) of the first articulated quadrilateral, while the reclinable part (10) of the bed is integral with side (2) of the second articulated quadrilateral. To the purposes of a better understanding of the working of the devices and the hinge object of this invention, angle $2\alpha$ formed by side (7) of the first articulated quadrilateral with side (8) of the second articulated quadrilateral may be assumed as a reference angle. Angle $2\theta$ is the angle formed by the extension of side (1) and side (2) which meet on the virtual point of instantaneous rotation (o) which is obviously the plotting on the paper of the virtual rotation axis of the whole hinge; $\beta = 2\theta$ is the angle formed by the reclinable part (10) with fixed part (9). In particular applications, sides (1) (2) (3) (4) (5) (6) (7) and (8) may be all equal to one another, while in other applications sides (1) and (5) of the first quadrilateral and sides (2) (6) of the second quadrilateral are equal to one another (length s), and sides (3) (7) of the first quadrilateral and sides (4) (8) of the second quadrilateral are, in their turn, equal to one another and their length (i) is different from (s).

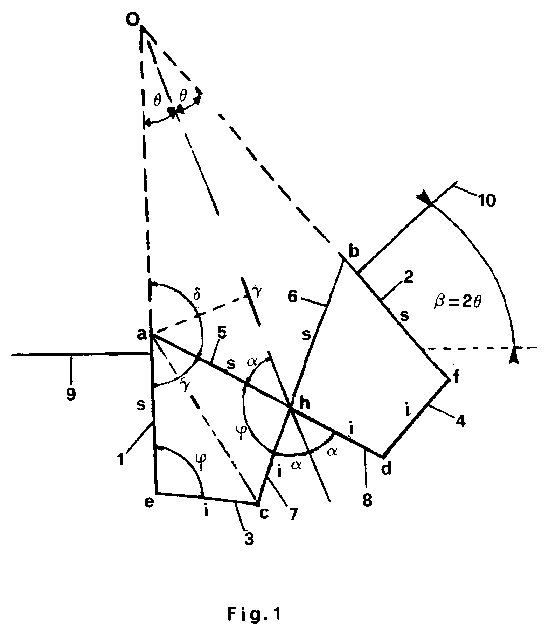

From fig. 1, because of the trigonometric relations existing between the sides of the two articulated quadrilaterals and the angles they form, one can write:

$$ea = ha = hb = fb = s$$
$$ec = hc = hd = fd = i$$
$$\phi = 180° - 2\alpha$$

$$tg\, \gamma/2 = \frac{i \sin \phi}{s - (i \cos \phi)}$$

$$\delta = 180° - 2\alpha \quad \theta = 180° - (\delta + \alpha)$$
$$ar = ao \sin\theta \quad ao \sin\theta = ah \sin\alpha$$
$$ar = ah \sin\alpha$$

$$ao = ah\, \frac{\sin\alpha}{\sin\theta} = s\, \frac{\sin\alpha}{\sin\theta}$$

By defining:

$$K = \frac{ao}{ae} = \frac{s\, \dfrac{\sin\alpha}{\sin\theta}}{s} = \frac{\sin\alpha}{\sin\theta}$$

By fixing a value of the ratio between sides s/i and utilizing the preceding formulae, a data sequences has been constructed like the one shown on Table I, calculated for a value s/i = 1.3. By fixing increasing values of angle $2\alpha$, the corresponding angles $\beta = 2\theta$ and the corresponding k values have been tabulated. As it can be inferred from the observation of Table I, by s/i = 1.3, the maximum value of the inclination angle $\beta$ ($\beta$ = 69.078) of the reclinable part (10) is obtained when $2\alpha$ = 120°, with a corresponding value of k = 1.527.

By collecting the data relating to s/i values, which range from 0.1 to 2.9, Table II has been constructed in which the value of $\beta$max angle of maximum inclination of the reclinable part and the values of kmin (calculated for angles $2\alpha$ close to 0) and kmax calculated for $\beta = \beta$max has been associated to each value of s/i ratio.

As it can also be inferred from the observation of Table II, hinges can be produced having rotation virtual axes distant from same hinge and of limited size.

In choosing the suitable configuration of the hinge, individuated by the s/i ratio, it can be remarked that the increase of such ratio corresponds to a reduction of the overall dimensions of the hinge, necessary to obtain a given distance of the rotation axis, but also to a reduction of the value of the maximum inclination axis ($\beta$max) of the inclinable part.

In particular, the optimum value for the utilization of the hinge object of this invention in the construction of hospital beds is about s/i = 1.3.

On the contrary, if the hinge object of this invention should be used for the construction of a folding bed, a s/i value comprised between 0.9 and 1 would be very advantageous, as in such case $\beta$max would be close to 180°, meaning that the inclinable part (10) is completely foldable on the fixed part (9).

The adoption of the hinge object of this invention is particularly suitable in beds, in particular in those hospital beds whose mattress is constituted by a set of cross elements adjoining one another; in this case, the two cross elements closest to the hinge, which rest one on the fixed part and the other on the reclinable part, do not interfere with one another during the rotation of said reclinable part.

3

While the hinge object of this invention has been especially designed for hospital beds, it may be utilized, without overstepping the field of this invention, in any other application having the same need of a rotation virtual axis lying outside the hinge.

Table 1

S/I: 1.3     I: .76923079744459868     S: 1

| 2α° | × | S/I | = | 2θ | = | β° |
|---|---|---|---|---|---|---|
| 2 | × | 1.353 | = | 20 | = | 1.478 |
| 4 | × | 1.353 | = | 20 | = | 2.956 |
| 6 | × | 1.353 | = | 20 | = | 4.433 |
| 8 | × | 1.353 | = | 20 | = | 5.910 |
| 10 | × | 1.353 | = | 20 | = | 7.385 |
| 12 | × | 1.354 | = | 20 | = | 8.858 |
| 14 | × | 1.354 | = | 20 | = | 10.330 |
| 16 | × | 1.354 | = | 20 | = | 11.799 |
| 18 | × | 1.354 | = | 20 | = | 13.266 |
| 20 | × | 1.355 | = | 20 | = | 14.730 |
| 22 | × | 1.355 | = | 20 | = | 16.191 |
| 24 | × | 1.355 | = | 20 | = | 17.648 |
| 26 | × | 1.356 | = | 20 | = | 19.101 |
| 28 | × | 1.356 | = | 20 | = | 20.549 |
| 30 | × | 1.357 | = | 20 | = | 21.993 |
| 32 | × | 1.357 | = | 20 | = | 23.432 |
| 34 | × | 1.358 | = | 20 | = | 24.865 |
| 36 | × | 1.359 | = | 20 | = | 26.293 |
| 38 | × | 1.359 | = | 20 | = | 27.714 |
| 40 | × | 1.360 | = | 20 | = | 29.128 |
| 42 | × | 1.361 | = | 20 | = | 30.535 |
| 44 | × | 1.362 | = | 20 | = | 31.933 |
| 46 | × | 1.363 | = | 20 | = | 33.324 |
| 48 | × | 1.364 | = | 20 | = | 34.705 |
| 50 | × | 1.365 | = | 20 | = | 36.078 |
| 52 | × | 1.366 | = | 20 | = | 37.440 |
| 54 | × | 1.367 | = | 20 | = | 38.791 |
| 56 | × | 1.368 | = | 20 | = | 40.131 |
| 58 | × | 1.370 | = | 20 | = | 41.459 |
| 60 | × | 1.371 | = | 20 | = | 42.773 |
| 62 | × | 1.373 | = | 20 | = | 44.075 |

Table 1 (cont.'d)

| $2\alpha°$ | k | $\beta°$ = $2\theta$ |
|---|---|---|
| $2\alpha°$ = 64 | k = 1.374 | $\beta°$ = $2\theta$ = 45.362 |
| $2\alpha°$ = 66 | k = 1.376 | $\beta°$ = $2\theta$ = 46.633 |
| $2\alpha°$ = 68 | k = 1.378 | $\beta°$ = $2\theta$ = 47.888 |
| $2\alpha°$ = 70 | k = 1.380 | $\beta°$ = $2\theta$ = 49.126 |
| $2\alpha°$ = 72 | k = 1.382 | $\beta°$ = $2\theta$ = 50.346 |
| $2\alpha°$ = 74 | k = 1.384 | $\beta°$ = $2\theta$ = 51.546 |
| $2\alpha°$ = 76 | k = 1.386 | $\beta°$ = $2\theta$ = 52.725 |
| $2\alpha°$ = 78 | k = 1.389 | $\beta°$ = $2\theta$ = 53.882 |
| $2\alpha°$ = 80 | k = 1.392 | $\beta°$ = $2\theta$ = 55.016 |
| $2\alpha°$ = 82 | k = 1.395 | $\beta°$ = $2\theta$ = 56.125 |
| $2\alpha°$ = 84 | k = 1.398 | $\beta°$ = $2\theta$ = 57.207 |
| $2\alpha°$ = 86 | k = 1.401 | $\beta°$ = $2\theta$ = 58.260 |
| $2\alpha°$ = 88 | k = 1.405 | $\beta°$ = $2\theta$ = 59.283 |
| $2\alpha°$ = 90 | k = 1.408 | $\beta°$ = $2\theta$ = 60.274 |
| $2\alpha°$ = 92 | k = 1.412 | $\beta°$ = $2\theta$ = 61.231 |
| $2\alpha°$ = 94 | k = 1.417 | $\beta°$ = $2\theta$ = 62.150 |
| $2\alpha°$ = 96 | k = 1.422 | $\beta°$ = $2\theta$ = 63.029 |
| $2\alpha°$ = 98 | k = 1.427 | $\beta°$ = $2\theta$ = 63.866 |
| $2\alpha°$ = 100 | k = 1.432 | $\beta°$ = $2\theta$ = 64.657 |
| $2\alpha°$ = 102 | k = 1.439 | $\beta°$ = $2\theta$ = 65.399 |
| $2\alpha°$ = 104 | k = 1.445 | $\beta°$ = $2\theta$ = 66.088 |
| $2\alpha°$ = 106 | k = 1.452 | $\beta°$ = $2\theta$ = 66.719 |
| $2\alpha°$ = 108 | k = 1.460 | $\beta°$ = $2\theta$ = 67.289 |
| $2\alpha°$ = 110 | k = 1.469 | $\beta°$ = $2\theta$ = 67.791 |
| $2\alpha°$ = 112 | k = 1.478 | $\beta°$ = $2\theta$ = 68.221 |
| $2\alpha°$ = 114 | k = 1.489 | $\beta°$ = $2\theta$ = 68.573 |
| $2\alpha°$ = 116 | k = 1.500 | $\beta°$ = $2\theta$ = 68.838 |
| $2\alpha°$ = 118 | k = 1.513 | $\beta°$ = $2\theta$ = 69.009 |
| $2\alpha°$ = 120 | k = 1.527 | $\beta°$ = $2\theta$ = 69.078 |

EP 0 577 120 A1

Table 2

| | | | |
|---|---|---|---|
| S/I: 0.1 | k min: 0.38 | k max: 1.00 | ß max°: 264.141 |
| S/I: 0.2 | k min: 0.43 | k max: 1.00 | ß max°: 258.349 |
| S/I: 0.3 | k min: 0.48 | k max: 1.00 | ß max°: 252.366 |
| S/I: 0.4 | k min: 0.54 | k max: 1.00 | ß max°: 246.184 |
| S/I: 0.5 | k min: 0.60 | k max: 1.00 | ß max°: 239.996 |
| S/I: 0.6 | k min: 0.67 | k max: 1.00 | ß max°: 232.916 |
| S/I: 0.7 | k min: 0.74 | k max: 1.00 | ß max°: 225.489 |
| S/I: 0.8 | k min: 0.82 | k max: 1.00 | ß max°: 216.778 |
| S/I: 0.9 | k min: 0.90 | k max: 1.00 | ß max°: 205.669 |
| S/I: 1.0 | k min: 1.00 | k max: 1.00 | ß max°: 179.886 |
| S/I: 1.1 | k min: 1.11 | k max: 1.16 | ß max°: 110.654 |
| S/I: 1.2 | k min: 1.22 | k max: 1.33 | ß max°: 85.878 |
| S/I: 1.3 | k min: 1.35 | k max: 1.53 | ß max°: 69.079 |
| S/I: 1.4 | k min: 1.50 | k max: 1.75 | ß max°: 56.483 |
| S/I: 1.5 | k min: 1.67 | k max: 2.00 | ß max°: 46.567 |

EP 0 577 120 A1

Table 2 (cont.'d)

| S/I: | κ min: | κ max: | β max°: |
|---|---|---|---|
| 1.6 | 1.86 | 2.29 | 38.531 |
| 1.7 | 2.08 | 2.62 | 31.889 |
| 1.8 | 2.33 | 3.00 | 26.325 |
| 1.9 | 2.64 | 3.46 | 21.619 |
| 2.0 | 3.00 | 4.00 | 17.612 |
| 2.1 | 3.45 | 4.67 | 14.188 |
| 2.2 | 4.00 | 5.50 | 11.256 |
| 2.3 | 4.72 | 6.57 | 8.746 |
| 2.4 | 5.67 | 8.00 | 6.607 |
| 2.5 | 7.00 | 10.01 | 4.795 |
| 2.6 | 9.01 | 13.00 | 3.280 |
| 2.7 | 12.35 | 18.00 | 2.041 |
| 2.8 | 19.03 | 28.00 | 1.066 |
| 2.9 | 39.13 | 57.92 | 0.362 |

## Claims

1. A hinge for a bed, in particular a hospital bed, comprising at least two identical devices (11) connecting two elements (9) (10) of said bed and allowing the rotation of said element (10) with respect to said element (9), characterized in that its rotation axis is virtual and lies outside the hinge's overall dimensions.

2. A hinge according to claim 1, characterized in that said element (9) is the fixed part and said element (10) is the inclinable part of said bed.

3. A hinge according to claim 1, characterized in that each of said devices (11) is constituted by a first articulated quadrilateral comprising sides (1) (3) (5) (7) and a second articulated quadrilateral comprising sides (2) (4) (6) (8); in that said sides (5) and (7) of said first articulated quadrilateral are the extensions of said sides (8) and (6) respectively of said second articulated quadrilateral; and lastly in that said sides (5) (6) (7) and (8) rotate about the same articulation (h).

4. A hinge according to claims 2 and 3, characterized in that said fixed part (9) of said bed is integral with said side (1) of said first articulated quadrilateral; and in that said inclinable part (10) of said bed is integral with side (2) of said second articulated quadrilateral

5. A hinge according to claim 3, characterized in that said sides (1) and (5) of said first articulated quadrilateral and said sides (2) and (6) of said second articulated quadrilateral are equal to one another and have all a first length; and in that said sides (3) and (7) of said first articulated quadrilateral and said sides (4) and (8) of said second articulated quadrilateral are equal to one another and have all a second length.

6. A hinge according to claim 5, characterized in that said first length of said sides (1) (2) (5) (6) and said second length of said sides (3) (4) (7) (8) are equal.

7. A hinge according to claim 5, characterized in that said first length of said sides (1) (2) (5) (6) and said second length of said sides (3) (4) (7) (8) are different.

8. A hinge according to claim 7, characterized in that the s/i ratio between said first length of said sides (1) (2) (5) (6) and said second length of said sides (3) (4) (7) (8) is comprised between 0.95 and 1.5.

9. A hinge according to claim 8, characterized in that for a hospital bed said s/i ratio is 1.3.

10. A hinge according to claim 8, characterized in that for a folding bed said s/i ratio is comprised between 0.9 and 1.

11. A bed having at least a fixed and an inclinable part which are linked by a hinge as claimed in claims 1-10, wherein said inclinable part is set in motion by an actuator which allows the inclination and translation of said inclinable part.

Fig. 1

Fig. 2

Fig. 3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X<br>A | US-A-2 994 363 (FOX)<br>* column 2, line 53 - column 3, line 3; figures 1,2 *<br>--- | 1,3,7<br>8,10 | A61G7/015<br>F16C11/00<br>F16C11/04 |
| X<br>A | US-A-2 949 955 (BARABAS)<br>* column 2, line 62 - column 3, line 45; figures 2,3 *<br><br>----- | 1,3,7<br>8,10 | |

TECHNICAL FIELDS
SEARCHED (Int. Cl.5 )

A61G
F16C
A47C

The present search report has been drawn up for all claims

| Place of search | Date of completion of the search | Examiner |
|---|---|---|
| THE HAGUE | 21 SEPTEMBER 1993 | BAERT F. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)